# EUROPÄISCHE PATENTSCHRIFT

(11) **EP 0 443 065 B1**
(45) Veröffentlichungstag und Bekanntmachung des Hinweises auf die Patenterteilung: **07.09.1994**
(21) Anmeldenummer: 90103398.5
(22) Anmeldetag: 22.02.1990
(51) Int. Cl.: B60N 2/00

(54) **Doppel-Fahrgastsitz**
Double passenger seat
Siège double de passager

(43) Veröffentlichungstag der Anmeldung: 28.08.1991
(73) Patentinhaber: Ignaz Vogel GmbH & Co KG, Fahrzeugsitze, D-76228 Karlsruhe (DE)
(72) Erfinder: Vogel, I., D-7500 Karlsruhe 41-Stu (DE)
(74) Vertreter: Trappenberg, Hans

(56) Entgegenhaltungen:
- EP-A- 0 263 189
- EP-A- 0 283 571
- EP-A- 0 330 594
- DE-A- 3 022 640
- DE-A- 3 147 045
- DE-A- 3 508 333
- FR-A- 2 123 390

## Beschreibung

Die Erfindung betrifft einen Doppel-Fahrgastsitz zum Einbau in Land-, Wasser- und Luftfahrzeuge, gebildet aus einem Sitzuntergestell, auf dem zwei Sitzteile und jeweils mit ihnen starr oder verschwenkbar verbundene Rückenteile angeordnet sind, wobei eines der Sitzteile auf einem Paar geradlinig führender Verstellschienen quer zur Sitzrichtung verschiebbar ist und das Sitzuntergestell aus Stützfüßen besteht, auf denen ein aus zwei mit Abstand voneinander angeordneten Profilstäben oder aus einer entsprechend geformten Profilplatte gebildeter Querbügel befestigt ist, auf dem die Sitzteile gegebenenfalls über Montageplatten anzuordnen sind (s. zum Beispiel EP-B-0 263 189).

Fahrgastsitze müssen, über die Bedingungen für normale Sitzmöbel, wie Sitzkomfort und ansprechendes Äußere hinaus, auch "betriebssicher" sein. Das heißt, daß diese Fahrgastsitze, die ja wesentlich härteren Beanspruchungen als normale Sitzmöbel ausgesetzt sind, äußerst stabil sein müssen, daß sie trotzdem in der Lage sein müssen, Aufprallenergie splitterfrei nachgebend aufzunehmen, daß sie auch nach langen Betriebszeiten noch klapperfrei sein müssen und daß sie trotz allem nur ein geringes Gewicht aufweisen dürfen. Eine weitere wichtige Forderung ist die der wirtschaftlichen Herstellbarkeit der Fahrgastsitze, wie auch deren wirtschaftlicher Betrieb, durch die Möglichkeit der Auswechslung von Verschleißteilen. Auch sollen diese Fahrgastsitze in den betreffenden Fahrzeugen einfach zu montieren und den dortigen beziehungsweise den gewünschten Platzverhältnissen anzupassen sein. Eine weitere Forderung, die aus dem Zwang zur Wirtschaftlichkeit und damit zur Herstellung großer Stückzahlen resultiert, ist, daß die Fahrgastsitze ein möglichst geringes Volumen aufweisen sollen, daß sie also weitestgehend in Einzelteile zerlegt zu versenden sind.

Diesen gesamten Forderungen wurden die bisher bekannten Fahrgastsitze nicht gerecht. Unter Hintanstellung der anderen Forderungen wurden diese Fahrgastsitze vielmehr so stabil aufgebaut, daß sie mit Sicherheit über die gesamte Standzeit der Fahrzeugsitze den an sie gestellten Festigkeitsanforderungen genügten und auch nach langer Gebrauchsdauer noch klapperfrei waren. Daraus resultierten jedoch nicht nur teure, sondern auch verhältnismäßig schwere Fahrgastsitze, so daß die Fahrzeuge immer ein recht hohes Totgewicht mitschleppen mußten. Außerdem wurden äußerst kostenaufwendig jeweils den bestimmten Anforderungen angepaßte Fahrgastsitze gefertigt.

Neben den oben angeführten Forderungen sollen die Sitze auch noch so gestaltet sein, daß sie zwar aus ökonomischen Gründen möglichst dicht hintereinander angeordnet werden können, daß jedoch trotz dieser dichten Anordnung noch genügend Beinfreiheit zum komfortablen Sitzen verbleibt. Maßgebend für diese Beinfreiheit ist die Höhe des Untergestells, auf dem die Sitzteile angebracht sind. Da die Höhe der Sitzfläche den anatomischen Gegebenheiten folgen muß, andererseits auch die Sitzteile eine bestimmte Polsterhöhe nicht unterschreiten dürfen, bleibt zur Verbesserung der Beinfreiheit beziehungsweise zur Maximierung der freien, unter dem Sitzuntergestell verbleibenden Höhe bei den Sitzgestellen der oben beschriebenen Art nur die Möglichkeit, die quer verlaufenden Teile des Sitzuntergestells möglichst flach auszubilden. Eine weitere Möglichkeit, unter Abkehr von der beschriebenen bewährten Art, wurde auch darin gesehen, zwischen den Stützfüßen nur einen mittleren Träger vorzusehen, der dann allerdings sehr stabil aufgebaut werden muß, um den übrigen Bedingungen genügen zu können. Insbesondere hat sich gezeigt, daß dieser mittlere Träger trotz stabiler Ausführung nicht dafür geeignet ist, die hohen Torsionskräfte, die bei einem Unfall auf ihn einwirken können, aufzunehmen. Es werden daher, bei modernen Fahrgastsitzen, stets zwei mit Abstand voneinander angeordnete, die Stützfüße überbrückende Konstruktionsteile oder eine entsprechend geformte Platte zum Aufbau der Sitzteile vorgesehen.

Bei der Berechnung der Höhe dieser Untergestelle ist auch noch die Höhe der Verstellschiene zu berücksichtigen, die es erlaubt, einen der Sitzteile quer zur Sitzrichtung zu verschieben, die also zwischen der Oberseite des Untergestells und der Unterseite des Sitzteils beziehungsweise der entsprechenden Montageplatte anzubringen ist.

Eine sehr gute Lösung, die all den oben gestellten Bedingungen gerecht wird, ist in der DE-OS 30 22 640 angegeben. Vorgesehen sind hier ein Paar im Abstand voneinander angeordnete, die Stützfüße überbrückende Profilstäbe, die im Querschnitt doppel-C-förmig ausgebildet sind. Dadurch entstehen zwei Führungsnuten für Verbindungsschrauben, so daß sowohl die Stützfüße in nahezu beliebigem Abstand voneinander an den Profilstäben angebracht werden können, wie auch die Sitzteile unschwer, wiederum in beliebigem Abstand voneinander, zu befestigen sind. Die beiden Profilstäbe können auch durch eine zwischengefügte, mittragende Platte als Abstandhalter verbunden sein. Nachteilig macht sich bei dieser Konstruktion allerdings die Höhe der Profilstäbe beziehungsweise der Profilplatte bemerkbar, die jedoch aus Stabilitätsgründen notwendig ist.

Eine Verbesserung in dieser Hinsicht ist gegeben durch eine Konstruktion nach der EP-B-0 263 189, bei der die Stabilität der wiederum mit doppel-C-förmigen Nuten versehenen Profilstäbe dadurch herbeigeführt wird, daß die im Querschnitt C-förmigen Profilteile in jeweils einem Profilstab eingebettet sind, der zwei durchgehende, in sich geschlossene Kastenholme aufweist. Da die Stabilität dieser Profilstäbe beziehungsweise dieser Profilplatte durch die Kastenholme herbeigeführt wird, können sie bei gleicher Belastungsmöglichkeit niedriger aufgebaut sein. Allerdings müssen die Verstellschienen, ebenso wie bei der zuvor beschriebenen Konstruktion, auch hier noch auf den Profilstäben beziehungsweise auf der Profilplatte angeordnet werden, so daß sich die Höhe der Gesamtkonstruktion noch um die Höhe der Verstellschiene vergrößert beziehungsweise die Beinfreiheit entsprechend verringert wird.

Aufgabe der Erfindung ist es, eine Möglichkeit anzugeben, wie diese Profilstäbe beziehungsweise diese Profilplatte ausgebildet werden können, so daß die Gesamtkonstruktion - mit oder ohne Verstellschiene - eine möglichst geringe Höhe aufweist beziehungsweise daß die Konstruktion eine möglichst große Beinfreiheit gewährt, ohne daß die notwendige Stabilität beeinträchtigt wird.

Erreicht wird dies in erfindungsgemäßer Weise dadurch, daß die Profilstäbe beziehungsweise die Profilplatte einen in Längsrichtung verlaufenden, in sich geschlossenen Kastenholm aufweisen, der mit mindestens einer zum Anbringen an den Stützfüßen dienenden und mit einer weiteren, etwa auf gleicher Ebene liegenden, zur Montage der Sitzteile dienenden Verbindungsschiene verbunden ist. Hierbei können die Verbindungsschienen, wie auch bei den bekannten Konstruktionen, zweckmäßigerweise wiederum einen C-förmigen Querschnitt aufweisen. Selbstverständlich können die Profilstäbe beziehungsweise die Profilplatte noch weitere Befestigungsmöglichkeiten, sei es nun als Verbindungsschiene, als Langloch oder Durchgangsloch aufweisen, um gegebenenfalls über Zusatz-Verbindungsglieder eine spezielle Montage der Sitze oder zusätzlicher Sitzeinrichtungen zu ermöglichen.

Nicht mehr also wie bei den bekannten Konstruktionen, werden die C-förmigen Profilteile übereinander angeordnet, sondern etwa auf gleicher Höhe liegend nebeneinander, so daß dadurch die Höhe eines Profilteils eingespart ist. Da jedoch die Höhe des Kastenholms sein Widerstandsmoment bestimmt und ein gewisses Widerstandsmoment, um die Stabilität der Gesamtkonstruktion nicht zu beeinträchtigen, nicht unterschritten werden darf, sollte, um die Profilstäbe beziehungsweise die Profilplatte nicht zu massiv ausführen zu müssen, die Höhe des Kastenholms deutlich

Aus der DE-A-3 147 045 ist eine Mehrfachsitzanordnung für Omnibusse bekannt, bei der der gangseitige Sitz quer zur Sitzrichtung verschoben werden kann. Hierzu sind zwei zueinander parallele und aus je zwei ineinander geführten Schienen, nämlich einer Sitzschiene und einer Unterschiene, zusammengesetzte Längsführungen vorhanden. Die Längsführungen und zwei in Sitzrichtung verlaufende Träger bilden zusammen einen Sitztragrahmen. Die Träger sind als U-Profil ausgebildet, die Unterschiene als mehrfach abgewinkeltes Profil. Durch eine solche Ausbildung wird zwar die mechanische Festigkeit verbessert, jedoch in senkrechter Richtung Raum benötigt.

Aus der EP-A-0 330 594 ist eine Fahrgastsitzanordnung bekannt, welche auf einer Profilplatte angeordnet ist. Die Profilplatte weist an ihren Enden zur Befestigung der Sitze auf den Füßen schienenförmige Aussparungen auf. Die Aussparungen sind in senkrechter Richtung übereinander angeordnet, wodurch in senkrechter Richtung zusätzlicher Platz benötigt wird.
die Höhe der Verbindungs-Profilteile, also der Verbindungsschienen, übersteigen. Dies ist auch ohne weiteres dadurch möglich, daß ja auf der Verbindungsschiene, an der die Sitzteile anzubringen sind, auch noch die Verstellschienen angebracht werden müssen, so daß nun der Kastenholm, ohne die Gesamthöhe der Konstruktion zu vergrößern, die Höhe der Verbindungsschiene zuzüglich der Höhe der Verstellschiene aufweisen kann. Damit ergibt sich eine Gesamtkonstruktion, die zwar äußerst niedrig ist, also sehr viel Beinfreiheit zuläßt, die aber trotzdem den sonstigen Bedingungen, insbesondere hinsichtlich der notwendigen Stabilität, genügt.

Insbesondere dann, wenn eine Profilplatte verwendet wird, wobei der plattenförmige Teil mittragend wirkt, können die Verbindungsschienen an der Unterseite des Kastenholms angebracht werden. Bei Profilstäben empfiehlt es sich jedoch, daß die Verbindungsschienen, deren Montageflächen übrigens in einem beliebigen Winkel zur Profilstab- beziehungsweise Profilplattenebene angeordnet sein können, seitlich oder beidseits des Kastenholms mit dessen Unterkante abschließend angebracht sind. Des oben angesprochenen Widerstandsmomentes wegen wird zweckmäßigerweise die Höhe des Kastenholms größer als seine Breite gewählt, wobei diese Höhe zumindest der Höhe der Verstellschiene entsprechen sollte. Als sehr zweckmäßig hat es sich schließlich noch erwiesen, daß die zur Montage der Sitzteile dienende Verbindungsschiene mit einer oberseitigen, eine auf der Verbindungsschiene angebrachte Verstellschiene ummantelnde Abdeckung, verbunden ist. Dadurch werden nicht nur die beweglichen Teile der Verstellschiene Verletzungen vermeidend abgedeckt, sondern es wird auch eine die Funktion dieser Verstellschiene beeinträchtigende Verschmutzung vermieden.

Auf der Zeichnung ist ein Ausführungsbeispiel der erfindungsgemäßen Konstruktion dargestellt, und zwar zeigen:

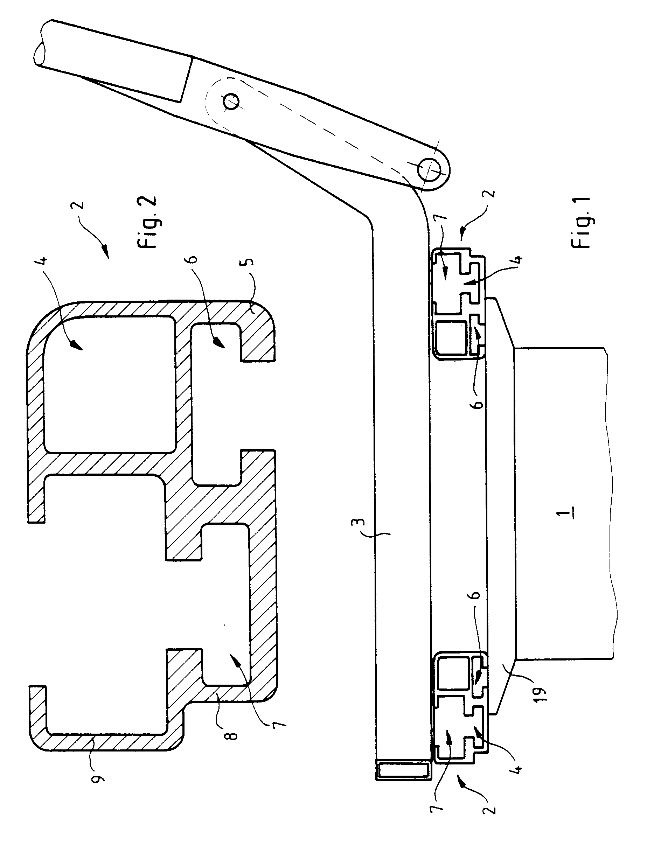

- Fig. 1: die Teil-Seitenansicht eines derartigen Doppel-Fahrgastsitzes, die
- Fig. 2: in vergrößerter Darstellung die Profilform eines Profilstabes, die
- Fig. 3: bis
- Fig. 7: verschiedene Querschnittsformen und
- Fig. 8: eine Profilplatte.

Das Sitzuntergestell eines Fahrgastsitzes ist gebildet aus Stützfüßen (1), aus die Stützfüße (1) überbrückenden Profilstäben (2) sowie aus als Montageplatten für die Sitzteile dienenden Rahmenvierecken (3). Bestandteil dieser etwa rechteckigen Profilstäbe (2) ist ein Kastenholm (4), der an der Unterseite mit einer im Querschnitt etwa C-förmigen Verbindungsschiene (5) verbunden ist. Die Verbindungsschiene (5) weist einen nach unten offenen Kanal (6) auf, in den Nutenschrauben einfügbar sind, mit denen die Profilstäbe (2) auf einer Traverse (19) der Stützfüße (1) angeschraubt werden können. Neben dieser Verbindungsschiene (5) ist eine weitere gleichgestaltete Verbindungsschiene (8) angeordnet, jedoch mit einem nach oben zu den Montagevierecken (3) offenen Kanal (7). Mittels auch hier in diesen Kanal (7) einzufügender Nutenschrauben (der Übersichtlichkeit halber sind diese Befestigungsschrauben nicht eingezeichnet) kann eine Verstellschiene an den Profilstäben (2) befestigt werden, auf denen sodann die Montagevierecke (3) anzuschrauben sind. Statt einer Verstellschiene können selbstverständlich auch dann, wenn eine Verschiebung des Sitzteils über eine solche Verstellschiene nicht gewünscht wird, Abstandsstücke angeschraubt werden. Oberhalb der Verbindungsschiene ne (8) ist eine aufgeschraubte Verstellschiene oder aufgeschraubte Abstandsstücke ummantelnde Abdeckung (9) vorgesehen, die die Verstellschiene außerdem gegen Verschmutzung schützt.

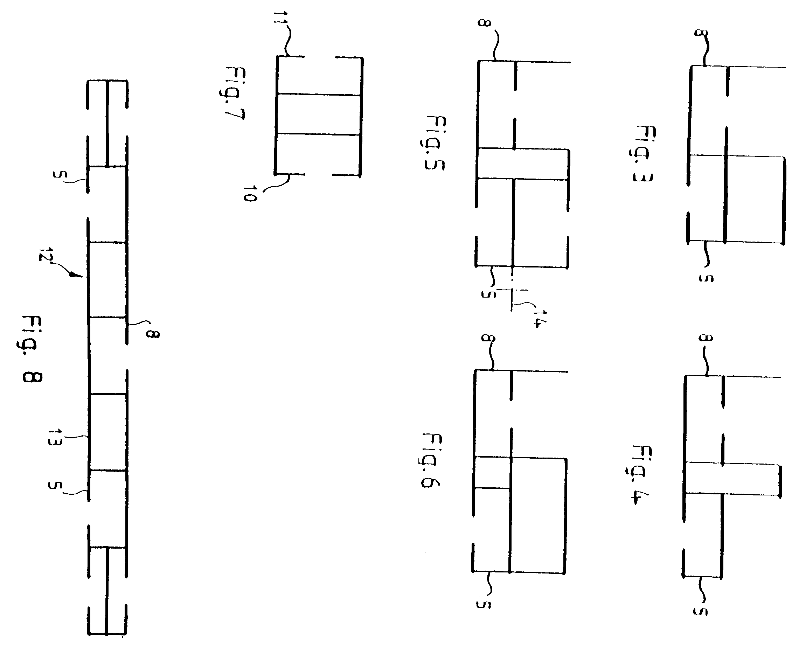

Die Fig. 3 bis 8 zeigen verschiedene Querschnittsmuster für die Profilstäbe (2). Hierbei sind die zu den Stützfüßen (1) offenen Verbindungsschienen jeweils mit der Bezugsziffer 5, die nach oben offenen Verbindungsschienen mit der Bezugsziffer 8 bezeichnet. Bei Fig. 5 ist noch eine seitwärts abstehende Flachschiene (14) erkennbar, die zum Befestigen weiterer Sitzteile dienen kann. Die Fig. 7 zeigt darüber hinaus eine Möglichkeit, auch seitlich Verbindungsschienen (10, 11) vorzusehen. Schließlich zeigt Fig. 8 noch eine Profilplatte (12), wobei die beiden Verbindungsschienen (5, 8) über eine in sich versteifte Platte (13) miteinander verbunden und auch noch weitere Verbindungsmöglichkeiten (5, 8) vorgesehen sind.

## Patentansprüche

1. Doppel-Fahrgastsitz zum Einbau in Land-, Wasser- und Luftfahrzeuge, gebildet aus einem Sitzuntergestell, auf dem zwei Sitzteile und jeweils mit ihnen starr oder verschwenkbar verbundene Rückenteile angeordnet sind, wobei eines der Sitzteile auf einem Paar geradlinig führender Verstellschienen quer zur Sitzrichtung verschiebbar ist und das Sitzuntergestell aus Stützfüßen (1) besteht, auf denen ein aus zwei mit Abstand voneinander angeordneten Profilstäben (2) oder aus einer entsprechend geformten Profilplatte (12) gebildeter Querbügel befestigt ist, auf dem die Sitzteile gegebenenfalls über Montageplatten anzuordnen sind, dadurch gekennzeichnet,
daß die Profilstäbe (2) beziehungsweise die Profilplatte (12) einen in Längsrichtung verlaufenden, in sich geschlossenen Kastenholm (4) aufweisen, der mit mindestens einer zum Anbringen an den Stützfüßen (1) dienenden und mit einer weiteren, etwa auf gleicher Ebene liegenden, zur Montage der Sitzteile (Rahmenvierecke 3) dienenden Verbindungsschiene (5, 8, 10, 11) verbunden ist.

2. Doppel-Fahrgastsitz nach Anspruch 1,
dadurch gekennzeichnet,
daß die Verbindungsschienen (5, 8, 10, 11) einen C-förmigen Querschnitt aufweisen.

3. Doppel-Fahrgastsitz nach Anspruch 1,
dadurch gekennzeichnet,
daß die Verbindungsschienen (5, 8) an der Unterseite des Kastenholms (4) angebracht sind.

4. Doppel-Fahrgastsitz nach Anspruch 1,
dadurch gekennzeichnet,
daß die Verbindungsschienen (5, 8, 10, 11) seitlich des Kastenholms (4) mit ihrer Unterkante abschließend angebracht sind.

5. Doppel-Fahrgastsitz nach Anspruch 3,
dadurch gekennzeichnet,
daß die Verbindungsschienen (5, 8, 10, 11) beidseits des Kastenholms (4) mit ihrer Unterkante abschließend angebracht sind.

6. Doppel-Fahrgastsitz nach Anspruch 1,
dadurch gekennzeichnet,
daß die Höhe des Kastenholms (4) größer als seine Breite ist.

7. Doppel-Fahrgastsitz nach einem oder mehreren der vorhergehenden Ansprüche,
dadurch gekennzeichnet,
daß der Kastenholm (4) zumindest die Höhe der Verstellschiene aufweist.

8. Doppel-Fahrgastsitz nach einem oder mehreren der vorhergehenden Ansprüche,
dadurch gekennzeichnet,
daß die zur Montage der Sitzteile dienende Verbindungsschiene (8) mit einer oberseitigen, eine auf der Verbindungsschiene (8) angebrachte Verstellschiene ummantelnde Abdeckung (9) verbunden ist.

## Claims

1. A double passenger seat for installation in land vehicles, water craft and aircraft, formed from a seat support structure on which are arranged two seat portions and back portions which are respectively rigidly or pivotably connected thereto, wherein one of the seat portions is displaceable transversely to the seat direction on a pair of rectilinearly extending adjustment rails and the seat support structure comprises support legs (1) on which is fixed a transverse yoke which is formed from two profile bars (2) arranged at a spacing from each other or from a suitably shaped profile plate (12) and on which the seat portions are to be arranged, possibly by way of mounting plates, characterised in that the profile bars (2) or the profile plate (12) have a box beam (4) which extends in the longitudinal direction and which is closed in itself and which is connected to at least one connecting bar (5) serving for mounting to the support legs (1) and to a further connecting bar (8, 10, 11) which is disposed approximately in the same plane and which serves for mounting the seat portions (rectangular frame members 3).

2. A double passenger seat according to claim 1 characterised in that the connecting bars (5, 8, 10, 11) are of a C-shaped cross-section.

3. A double passenger seat according to claim 1 characterised in that the connecting bars (5, 8) are disposed at the underside of the box beam (4).

4. A double passenger seat according to claim 1 characterised in that the connecting bars (5, 8, 10, 11) are disposed in such a way as to terminate with the underside thereof laterally of the box beam (4).

5. A double passenger seat according to claim 3 characterised in that the connecting bars (5, 8, 10, 11) are disposed in such a way as to terminate with the underside thereof on both sides of the box beam (4).

6. A double passenger seat according to claim 1 characterised in that the height of the box beam (4) is greater than its width.

7. A double passenger seat according to one or more of the preceding claims characterised in that the box beam (4) is at least of the height of the adjusting rail.

8. A double passenger seat according to one or more of the preceding claims characterised in that the connecting bar (8) which serves for mounting the seat portions is connected to a top cover (9) which encloses an adjusting rail mounted on the connecting bar (8).

## Revendications

1. Siège de passager double destiné à être monté dans des véhicules routiers, des bateaux ou des aéronefs, qui est composé d'un bâti inférieur de siège sur lequel sont disposées deux parties d'assise et deux parties de dossier qui sont chaque fois reliées à ces dernières de façon fixe ou pivotante, sachant que l'une des parties de l'assise peut être déplacée transversalement par rapport à la direction de l'assise sur une paire de rails de déplacement rectilignes et que le bâti inférieur du siège est composé de deux pieds d'appui (1) sur lesquels est fixée une traverse constituée de deux barres profilées (2) disposées espacées l'une de l'autre ou d'une plaque profilée (12) configurée en conséquence, sur laquelle il convient de disposer les parties de l'assise, le cas échéant par le biais de plaques de montage, caractérisé en ce que les barres profilées (2) ou la plaque profilée (12) présente(nt) un longeron-caisson fermé sur lui-même (4) et s'étendant dans la direction longitudinale, qui est au moins relié à un rail de liaison (5, 8, 10, 11) qui est destiné à être fixé aux pieds d'appui et à un autre rail de liaison situé approximativement dans le même plan qui sert à monter les parties de l'assise (cadres rectangulaires 3).

2. Siège de passager double selon la revendication 1, caractérisé en ce que les rails de liaison (5, 8, 10, 11) présentent une section transversale en forme de C.

3. Siège de passager double selon la revendication 1, caractérisé en ce que les rails de liaison (5, 8) sont fixés sur la face inférieure du longeron-caisson (4).

4. Siège de passager double selon la revendication 1, caractérisé en ce que les rails de liaison (5, 8, 10, 11) sont fixés sur le côté du longeron-caisson (4) en fermant ce dernier avec leur arête inférieure.

5. Siège de passager double selon la revendication 3, caractérisé en ce que les rails de liaison (5, 8, 10, 11) sont fixés de part et d'autre du longeron-caisson (4) en fermant ce dernier avec leur arête inférieure.

6. Siège de passager double selon la revendication 1, caractérisé en ce que la hauteur du longeron-caisson (4) est supérieure à sa largeur.

7. Siège de passager double selon l'une ou plusieurs des revendications précédentes, caractérisé en ce que le longeron-caisson (4) présente au moins la hauteur du rail de déplacement.

8. Siège de passager double selon l'une ou plusieurs des revendications précédentes, caractérisé en ce que le rail de liaison (8) servant à monter les parties de l'assise est relié à un capot (9) situé sur le dessus, qui entoure un rail de déplacement fixé sur le rail de liaison (8).
